# EUROPÄISCHE PATENTSCHRIFT

(11) **EP 2 662 592 B1**
(45) Veröffentlichungstag und Bekanntmachung des Hinweises auf die Patenterteilung: **19.04.2017**
(21) Anmeldenummer: 12167484.0
(22) Anmeldetag: 10.05.2012
(51) Int. Cl.: F16F 15/32, G01M 1/32

(54) **Verfahren und Vorrichtung zum Abziehen einer Schutzfolie von einer selbstklebenden Klebefläche**
Device and method for stripping a protective film from a self-adhesive surface
Procédé et dispositif d'extraction d'une feuille de protection sur une surface autocollante

(43) Veröffentlichungstag der Anmeldung: 13.11.2013
(73) Patentinhaber: WEGMANN automotive GmbH & Co. KG, 97209 Veitshöchheim (DE)
(72) Erfinder: Bode, Felix, 97209 Veitshöchheim (DE)
(74) Vertreter: Lohr, Georg

(56) Entgegenhaltungen:
- EP-A1- 1 967 757
- EP-A2- 1 253 414
- WO-A1-2007/081843
- WO-A1-2007/134788
- DE-A1-102007 014 461
- US-A1- 2005 104 438
- US-B1- 6 364 421

## Beschreibung

### Technisches Gebiet

Die Erfindung betrifft ein Verfahren zum Abziehen einer Schutzfolie von einer an einem Bauelement ausgebildeten selbstklebenden Klebefläche.

### Stand der Technik

Selbstklebende Klebeflächen werden in der Technik vermehrt zum Befestigen von Bauteilen an zugeordneten Strukturen eingesetzt. Die Klebeflächen werden im Allgemeinen durch Schutzfolien geschützt, die erst unmittelbar vor dem Einsatz eines derartigen Bauteils von der Klebefläche abgezogen werden, um sicher zu stellen, dass deren Klebeeigenschaften nicht vorzeitig beeinträchtigt werden. Ein typisches Beispiel für mit einer selbstklebenden Klebefläche ausgestattete Bauteile sind Auswuchtgewichte zum Auswuchten von Fahrzeugrädern, die mittels Klebung am Felgenrand des Fahrzeugrades befestigt werden. Die vorliegende Erfindung wird am Beispiel derartiger Auswuchtgewichte im Folgenden näher erläutert, ist jedoch darauf nicht beschränkt.

In modernen Fertigungsanlagen werden die Auswuchtgewichte im Allgemeinen in der Form eines so genannten Endlosbandes einer Auswuchtstation zugeführt. Das Endlosband besteht üblicherweise aus einem endlosen, doppelseitig klebenden Klebeband, auf dessen einer Oberfläche die Auswuchtgewichte in Reihe hintereinander aufgeklebt sind und dessen andere, freie Oberfläche mit einer Schutzfolie abgedeckt ist. In der Auswuchtstation werden die Auswuchtgewichte jeweils mit zugehörigem Klebeband- und Schutzfolienabschnitt vom Endlosband getrennt, die Schutzfolie wird abgezogen und das Auswuchtgewicht wird am zugeordneten Fahrzeugrad montiert.

Das Abziehen der Schutzfolie erfolgt im Allgemeinen manuell, was die Effizienz des im Übrigen weitgehend automatisierten Ablaufes erheblich verringert. Um ein manuelles Abziehen der Schutzfolie zu ermöglichen bzw. zu erleichtern, ist es aus der WO 2007/134788 A1 bereits bekannt, die Schutzfolie entlang einer Längsseite des Klebegewichtbandes überstehen zu lassen, so dass ein Monteur diesen überstehenden Rand ergreifen und die Schutzfolie abziehen kann. Neben der bereits beschriebenen Störung des automatisierten Ablaufes wird ein weiterer Nachteil des bekannten Verfahrens in der verhältnismäßig aufwändigen Herstellung des Klebebandes mit der seitlich überstehenden Schutzfolie gesehen. Danach wird zunächst in einer Bahnverarbeitungsanlage eine breite Bahn aus einem doppelseitig klebenden Material hergestellt, deren eine Seite durch eine Schutzfolie abgedeckt ist. Sodann werden aus dieser Bahn jeweils die für die Klebegewichtbänder benötigten Streifen in einer Breite geschnitten, die die Breite des überstehenden Randes der Schutzfolie mit umfasst. Vor oder nach dem Bestücken dieses Streifens mit den Auswuchtgewichten wird der Streifen in einem verhältnismäßig aufwändigen Verfahren entlang einer Linie, die eine spätere Seitenkante des Klebestreifens bestimmt, eingeschnitten und der dadurch gebildete Randstreifen von der Schutzfolie abgezogen, womit der überstehende Rand der Schutzfolie freigelegt wird.

Aus der US 2005/010 44 38 A1 ist ein Verfahren bekannt, bei welchem die Schutzfolie quer zur Längsausrichtung des Klebegewichtbandes ausgebildete Perforierlinien aufweist, die jeweils eine schwalbenschwanzförmige Lasche bilden, an der ein Monteur die Schutzschicht erfassen und von der Klebefläche abziehen kann. Außer dem fertigungsbedingten Aufwand hat auch dieses Verfahren den Nachteil, dass wegen des erforderlichen manuellen Arbeitsschrittes eine weitergehende Automatisierung behindert wird.

Dokument EP 1 253 414 A2 zeigt eine Vorrichtung und ein Verfahren zum Abziehen einer Schutzfolie gemäß dem Oberbegriff des Anspruchs 1.

### Darstellung der Erfindung

Der Erfindung liegt die Aufgabe zugrunde, ein Verfahren der im Oberbegriff des Anspruchs 1 genannten Art sowie eine Vorrichtung zur Durchführung dieses Verfahrens zu schaffen, welche ein Abziehen der Schutzfolie ohne manuellen Eingriff ermöglichen.

Diese Aufgabe wird gemäß der Erfindung einmal durch ein Verfahren gelöst, bei welchem wenigstens ein nadelartiges Stechwerkzeug schräg zur freien Oberfläche der Schutzfolie entlang einer Vorschubachse in die Schutzfolie eingesteckt wird, wobei danach das wenigstens eine Stechwerkzeug in einer in einem Winkel zur Vorschubachse stehenden Abheberichtung abgehoben und die Schutzfolie von der Klebefläche des zumindest bezüglich der Abheberichtung fixierten Bauelementes abgezogen wird.

Das in die Schutzfolie eingeführte Stechwerkzeug bildet in allen von der Vorschubrichtung abweichenden Richtungen eine formflüssige Verbindung mit der Schutzfolie, so dass diese in einer beliebigen, von der Vorschubrichtung abweichenden Abheberichtung von der Klebefläche abgezogen werden kann.

Um den Formschluss weiter zu verbessern, ist gemäß einer Ausgestaltung der Erfindung vorgesehen, dass mehrere zusammenwirkende Stechwerkzeuge in die Schutzfolie eingesteckt und gemeinsam abgehoben werden. In dieser Hinsicht besonders günstig ist dabei eine Lösung, bei der mehrere Stechwerkzeuge entlang unterschiedlicher Vorschubachsen in die Schutzfolie eingesteckt werden.

Gemäß einer bevorzugten Ausgestaltung der Erfindung ist vorgesehen, dass wenigstens zwei Stechwerkzeuge entlang sich kreuzender Vorschubachsen in die Schutzfolie eingesteckt werden. Jedes der Stechwerkzeuge blockiert auf diese Weise ein Abgleiten der Schutzfolie von dem jeweils anderen Stechwerkzeug.

Dieser Effekt wird insbesondere dann sicher gewährleistet, wenn die beiden Vorschubachsen im Wesentlichen in einer gemeinsamen, im Wesentlichen senkrecht auf der Oberfläche der Schutzfolie stehenden Wirkebene liegen und die Abhebebewegung der Stechwerkzeuge in der gemeinsamen Wirkebene verläuft.

Eine Vorrichtung zum Abziehen einer Schutzfolie von einer an einem Bauelement ausgebildeten Klebefläche umfasst nicht gemäß der Erfindung:
Mittel zum Halten des Bauelementes;
einen zu dem Bauelement hin zustellbaren und von diesem abhebbaren Werkzeugkopf; und
ein oder mehrere an dem Werkzeugkopf angeordnete, schräg zur Oberfläche der Schutzfolie des Bauelementes zustellbare Stechwerkzeuge.

Um eine Schutzfolie abzuziehen, wird das Bauelement, hier beispielhaft das Auswuchtgewicht in geeigneter Weise, z.B. in einer Spannvorrichtung fixiert, der Werkzeugkopf wird zugestellt, die Stechwerkzeuge werden in die Schutzfolie eingesteckt und der Werkzeugkopf wird wieder abgehoben.

### Beschreibung der Zeichnungen

Die Erfindung wird im Folgenden anhand der beiliegenden Zeichnungen näher erläutert. Diese zeigen
Figur 1 schematisch einen Werkzeugkopf mit zwei sich kreuzenden nadelartigen Stechwerkzeugen;

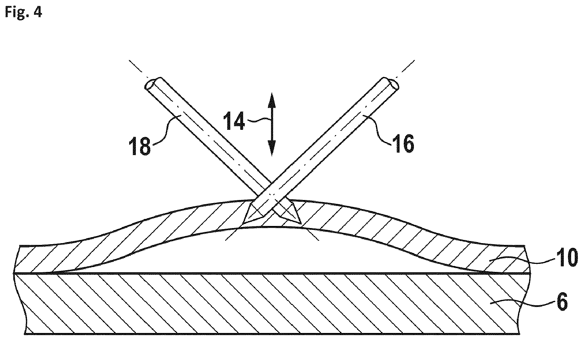

Figuren 2 bis 4 schematisch mehrere Verfahrensschritte beim Abziehen einer Schutzfolie von einer Klebefläche.

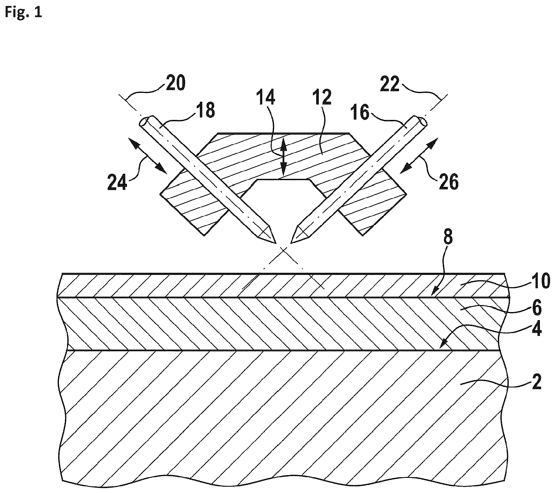

Fig. 1 zeigt einen Abschnitt eines Bauteils 2, auf dessen Oberfläche 4 ein doppelseitig klebendes Klebeband 6 aufgeklebt ist. Die Oberseite des Klebebandes 6 bildet die Klebefläche 8, mittels der das Bauteil 2 an einer anderen mechanischen Struktur befestigt wird. Die Klebefläche 8 des Klebebandes 6 ist mit einer Schutzfolie 10 abgedeckt, die die selbstklebende Klebefläche 8 schützt.

Ein Werkzeugkopf 12 ist in Richtung des Doppelpfeiles 14 zum Bauelement 2 hin zustellbar bzw. von diesem abhebbar.

Am Werkzeugkopf 12 sind zwei nadelartige Stechwerkzeuge 16, 18 jeweils entlang zugeordneter Vorschubachsen 20 bzw. 22 in Richtung der Doppelpfeile 24 bzw. 26 verschiebbar angeordnet.

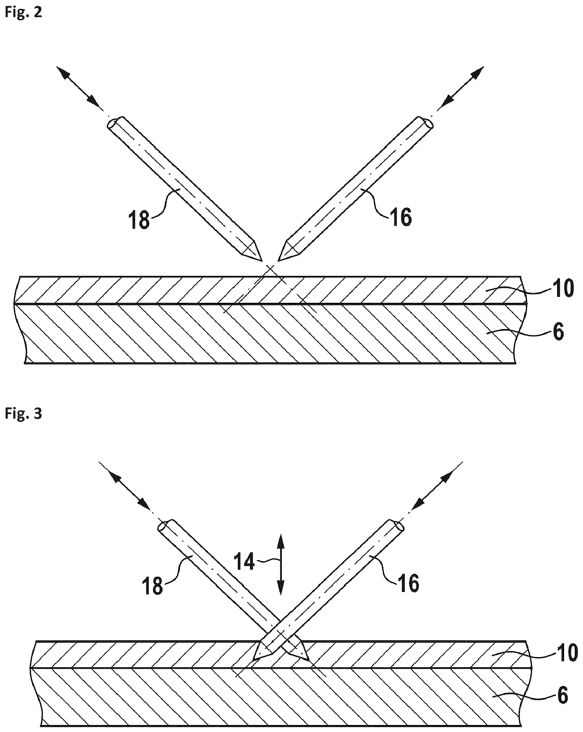

Um die Schutzfolie 10 von der an der Oberseite des Klebebandes 6 ausgebildeten Klebefläche 8 abzuziehen, wird der Werkzeugkopf 12 gegen das Bauteil 2 bis in eine Arbeitsposition zugestellt, so dass die Stechwerkzeuge 16 und 18 etwa die in Fig. 2 dargestellte Ausgangsposition einnehmen.

Sodann werden die Stechwerkzeuge 16, 18 in die Schutzfolie 10 eingeführt, so dass sie eine bezüglich der durch den Doppelpfeil 14 bezeichneten Abheberichtung formschlüssige Verbindung mit der Schutzfolie 10 bilden.

Anschließend wird der Werkzeugkopf 12 mit den Stechwerkzeugen 16, 18 in der durch den Doppelpfeil 14 bezeichneten Abheberichtung abgehoben, wobei die Schutzfolie 10 vom Klebeband 6 abgezogen wird.

### Bezugszeichenliste

- 2: Bauteil
- 4: Oberfläche
- 6: Klebeband
- 8: Klebefläche
- 10: Schutzfolie
- 12: Werkzeugkopf
- 14: Doppelpfeil
- 16: Stechwerkzeug
- 18: Stechwerkzeug
- 20: Vorschubachse
- 22: Vorschubachse
- 24: Doppelpfeil
- 26: Doppelpfeil

## Patentansprüche

1. Verfahren zum Abziehen einer Schutzfolie von einer an einem Bauelement ausgebildeten Klebefläche,
**dadurch gekennzeichnet, dass**
wenigstens ein nadelartiges Stechwerkzeug (16, 18) schräg zur freien Oberfläche der Schutzfolie (10) entlang einer Vorschubachse (20, 22) in die Schutzfolie (10) eingesteckt wird, und dass danach das wenigstens eine Stechwerkzeug (16, 18) in einer in einem Winkel zur Vorschubachse (20, 22) stehenden Abheberichtung (14) abgehoben und die Schutzfolie (10) von der Klebefläche (8) des zumindest bezüglich der Abheberichtung (14) fixierten Bauelementes (2)abgezogen wird.

2. Verfahren nach Anspruch 1,
**dadurch gekennzeichnet, dass**
mehrere zusammen wirkende Stechwerkzeuge (16, 18) in die Schutzfolie (10) eingesteckt und gemeinsam abgehoben werden.

3. Verfahren nach Anspruch 2,
**dadurch gekennzeichnet, dass**
mehrere Stechwerkzeuge (16, 18) entlang unterschiedlicher Vorschubachsen (20, 22) in die Schutzfolie (10) eingesteckt werden.

4. Verfahren nach Anspruch 2 oder 3,
**dadurch gekennzeichnet, dass**
wenigstens zwei Stechwerkzeuge (16, 18) entlang sich kreuzender Vorschubachsen (20, 22) in die Schutzfolie (10) eingesteckt werden.

5. Verfahren nach Anspruch 4,
**dadurch gekennzeichnet, dass**
die Vorschubachsen (20, 22) im Wesentlichen in einer gemeinsamen, im Wesentlichen senkrecht auf der Oberfläche der Schutzfolie (10) stehenden Wirkebene liegen.

6. Verfahren nach Anspruch 5,
**dadurch gekennzeichnet, dass**
die Abhebebewegung der Stechwerkzeuge (16, 18) in der gemeinsamen Wirkebene verläuft.

## Claims

1. A method for stripping a liner from an adhesive surface formed on a component,
**characterized in that**
at least one needle-like piercing tool (16, 18) is inserted obliquely to the free surface of the liner (10) along a feed axis (20, 22) into the liner (10), and that subsequently the at least one piercing tool (16, 18) is lifted in a lifting direction (14) being angled with respect to the feed axis (20, 22) and the liner (10) is stripped from the adhesive layer (8) of the component (2) being fixed at least with respect to the lifting direction (14).

2. Method according to claim 1,
**characterized in that**
multiple interacting piercing tools (16, 18) are inserted into the liner (10) and are lifted off together.

3. Method according to claim 2,
**characterized in that**
multiple piercing tools (16, 18) are inserted into the liner (10) along different feed axes (20, 22).

4. Method according to claim 2 or 3,
**characterized in that**
at least two piercing tools (16, 18) are inserted into the liner (10) along intersecting feed axes (20, 22).

5. Method according to claim 4,
**characterized in that**
the feed axes (20, 22) substantially lie in a common operative plane which is substantially perpendicular to the surface of the liner (10).

6. Method according to claim 5,
**characterized in that**
the lifting movement of the piercing tools (16, 18) runs in the common operative plane.

## Revendications

1. Procédé pour retirer un film protecteur d'une surface de collage formée sur un composant, **caractérisée en ce qu'**au moins un outil de ponction en forme d'aiguille (16, 18) est enfoncé dans le film protecteur (10) à l'oblique par rapport à la surface libre du film protecteur (10) le long d'un axe d'avancement (20, 22) et **en ce que** l'au moins un outil de ponction (16, 18) est ensuite soulevé dans un sens de soulèvement (14) formant un angle par rapport à l'axe d'avancement (20, 22) et le film protecteur (10) est retiré de la surface de collage (8) du composant (2) fixé au moins par rapport au sens de soulèvement (14).

2. Procédé selon la revendication 1, **caractérisé en ce que** plusieurs outils de ponction (16, 18) coopérant ensemble sont enfoncés dans le film protecteur (10) et soulevés ensemble.

3. Procédé selon la revendication 2, **caractérisé en ce que** plusieurs outils de ponction (16, 18) sont enfoncés dans le film protecteur (10) le long d'axes d'avancement (20, 22) différents.

4. Procédé selon la revendication 2 ou 3, **caractérisé en ce qu'**au moins deux outils de ponction (16, 18) sont enfoncés dans le film protecteur (10) le long de deux axes d'avancement (20, 22) qui se croisent.

5. Procédé selon la revendication 4, **caractérisé en ce que** les axes d'avancement (20,22) se trouvent pour l'essentiel dans un plan d'action commun, sensiblement perpendiculaire à la surface du film protecteur (10).

6. Procédé selon la revendication 5, **caractérisé en ce que** le mouvement de soulèvement des outils de ponction (16, 18) s'effectue dans le plan d'action commun.
